# EUROPEAN PATENT APPLICATION

(11) **EP 4 760 959 A1**
(43) Date of publication of application: **17.06.2026**
(21) Application number: 25845054.3
(22) Date of filing: 11.07.2025
(51) Int. Cl.: H01M 50/502, H01M 50/503, H01M 50/519, H01M 50/528

(54) **BUSBAR FRAME ASSEMBLY AND BATTERY MODULE INCLUDING SAME**

(30) Priority: 23.07.2024 KR 20240097118
(71) Applicant: LG Energy Solution, Ltd., Seoul 07335 (KR)
(72) Inventor: SHIN, Jonghong, Daejeon 34122 (KR); PARK, Won Kyoung, Daejeon 34122 (KR); JUNG, Kitaek, Daejeon 34122 (KR); KIM, Gunryang, Daejeon 34122 (KR)
(74) Representative: BCKIP Part mbB
(86) International application number: PCT/KR2025/010168
(87) International publication number: WO 2026/023957

(57) **Abstract**

A busbar frame assembly according to an embodiment of the present disclosure comprises: a busbar connected to electrode leads of a plurality of battery cells; a printed circuit board (PCB) connected to the busbars or the electrode leads for sensing the voltage of the battery cells; and a busbar frame on which the busbars are disposed, wherein the busbar frame includes a coupling part that couples with the busbar, and wherein the busbar includes a recessed part that couples with the coupling part.

## Description

### [TECHNICAL FIELD]

### Cross Citation with Related Application(s)

This application claims priority to and the benefit of Korean Patent Application No. 10-2024-0097118, filed on July 23, 2024, the disclosure of which is incorporated herein by reference in its entirety.

The present disclosure relates to a busbar frame assembly and a battery module including the same, and more particularly, to a busbar frame assembly that can increase the degree of freedom in designing a path of a printed circuit board and reduce the manufacturing unit price, and a battery module including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and a battery case which seals and accommodates the electrode assembly together with an electrolyte.

In general, depending on the shape of exterior cases, the lithium secondary battery may be classified into a can-type secondary battery in which the electrode assembly is incorporated into a metal can, and a pouch-type secondary battery in which the electrode assembly is incorporated into in a pouch made of an aluminum laminate sheet.

In the case of a secondary battery used for small-sized devices, two to three battery cells are disposed, but in the case of a secondary battery used for a medium- and large-sized device such as automobiles, a battery module or a battery pack in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

Meanwhile, a busbar connected to the battery module is provided inside the battery pack. The busbar is a rod-shaped metal member that extends along the longitudinal direction, and a through hole for connecting with a terminal busbar of a battery module may be formed at both end parts of the busbar. Such a busbar is configured to be in charge of HV (High voltage) connection in the battery pack. The HV connection means a connection that serves as a power source to supply electric power, and the busbar is configured to guide electrical connection of the battery module, and generally includes a metal material having excellent electrical conductivity. As an example, the busbar may include a copper(Cu) material.

The busbar may be disposed on a busbar frame. The busbar frame is a member that prevents the electrode lead and the busbar from contacting with other parts of the battery cell and causing a short circuit, and may include an electrically insulating material.

The busbar may be fixed to the busbar frame by a coupling part of the busbar frame. A conventional coupling part for fixing the busbar protrudes more than one surface of the busbar and couple to the busbar. In this case, the protruded coupling part has no choice but to impose numerous restrictions on the design and disposition of the welding plate and the printed circuit board.

### [DETAILED DESCRIPTION OF THE INVENTION[]

### [Technical Problem]

An object of the present disclosure is to increase the degree of freedom in designing a path of a printed circuit board and reduce the unit price of a busbar frame assembly through unification of the welding plate shape, and specifically, an object of the present disclosure is to provide a busbar frame assembly that can reduce a possibility of the occurrence of printed circuit board defects, and a battery module including the same.

However, the technical objects to be solved by embodiments of the present disclosure are not limited to the above-described objects, and can be variously expanded within the scope of the technical idea included in the present disclosure.

### [Technical Solution]

In an illustrative aspect of the present disclosure, provided is a busbar frame assembly, comprising: a busbar connected to electrode leads of a plurality of battery cells; a printed circuit board (PCB) connected to the busbars or the electrode leads for sensing the voltage of the battery cells; and a busbar frame on which the busbars are disposed, wherein the busbar frame includes a coupling part that couples with the busbar, and wherein the busbar includes a recessed part that couples with the coupling part.

In an embodiment, the recessed part may be located on one side surface of the busbar.

In an embodiment, based on a direction perpendicular to one surface of the busbar frame, the end of the coupling part may be lower in height than one surface of the busbar where the busbar is joined to the electrode lead.

In an embodiment, the end of the coupling part may not protrude over the one surface of the busbar.

In an embodiment, the end of the coupling part is formed with a hook.

In an embodiment, the hook may be coupled to the recessed part.

In an embodiment, the busbar frame assembly may comprise at least one welding plate that connects the busbars or the electrode leads to the printed circuit board.

In an embodiment, the welding plates may all have the same shape.

In an embodiment, at least a part of the welding plates may be disposed to extend in parallel to a part extending from the printed circuit board toward the busbar.

In another illustrative aspect of the present disclosure, provided is a battery module comprising the above-mentioned busbar frame assembly.

### [Advantageous Effects]

According to specific embodiments of the present disclosure, it is possible to increase the degree of freedom in designing a path of a printed circuit board and reduce a possibility of the occurrence of printed circuit board defects.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view showing a battery module according to an embodiment of the present disclosure.
FIG. 2 is a perspective view showing a busbar frame assembly included in the battery module of FIG. 1.
FIG. 3 is a plan view showing a busbar frame assembly included in the battery module of FIG. 1.
FIG. 4 is a plan view showing the busbar frame assembly of FIG. 3 viewed from a different angle.
FIG. 5 is a perspective view showing a state in which a printed circuit board and a welding plate are removed from the busbar frame assembly of FIG. 2.
FIG. 6 is an enlarged view showing a section "A" of FIG. 5 in an enlarged state.
FIG. 7 is a perspective view showing a busbar according to an embodiment of the present disclosure.
FIG. 8 is a plan view showing the busbar of FIG. 7.
FIG. 9 is an enlarged view showing a section "B" of FIG. 8 in an enlarged state.
FIG. 10 is a cross-sectional perspective view showing a cross section taken along a cutting line passing through a busbar in the busbar frame assembly of FIG. 5.
FIG. 11 is a cross-sectional view of FIG. 10 as viewed in the -X-axis direction.
FIG. 12 is an enlarged view showing a section "C" in FIG. 3 in an enlarged state.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

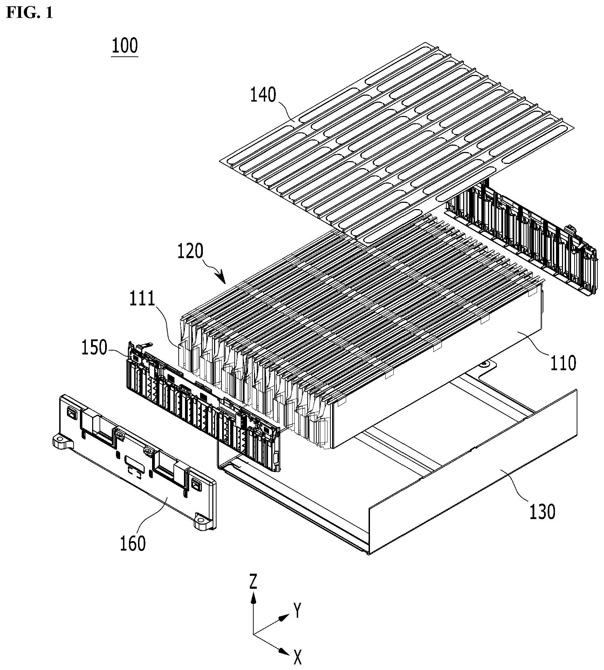

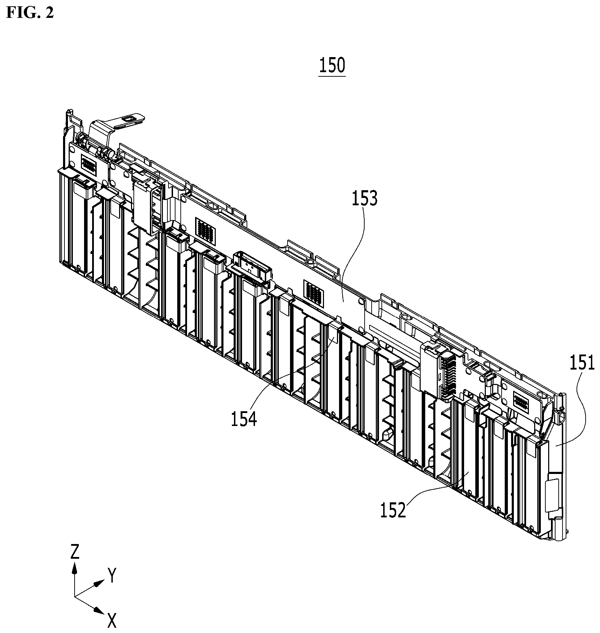

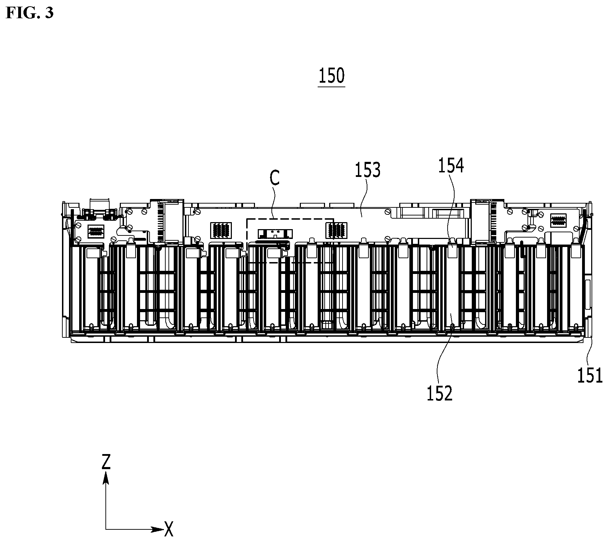

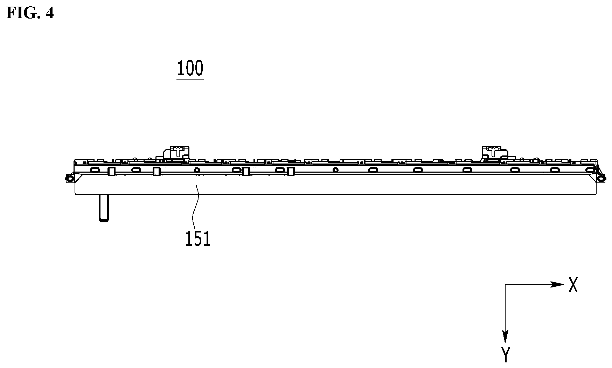

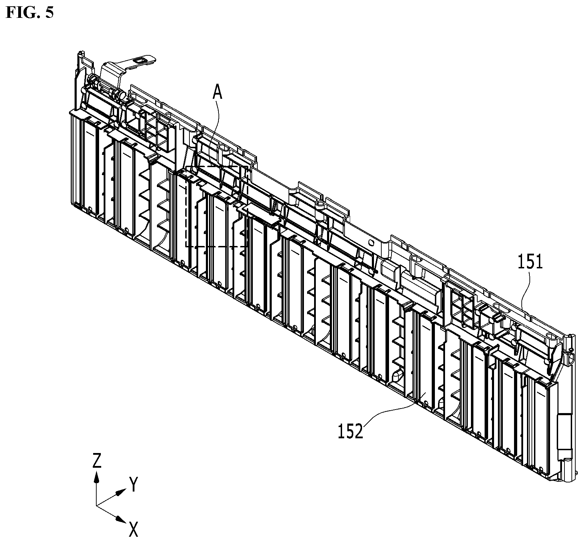

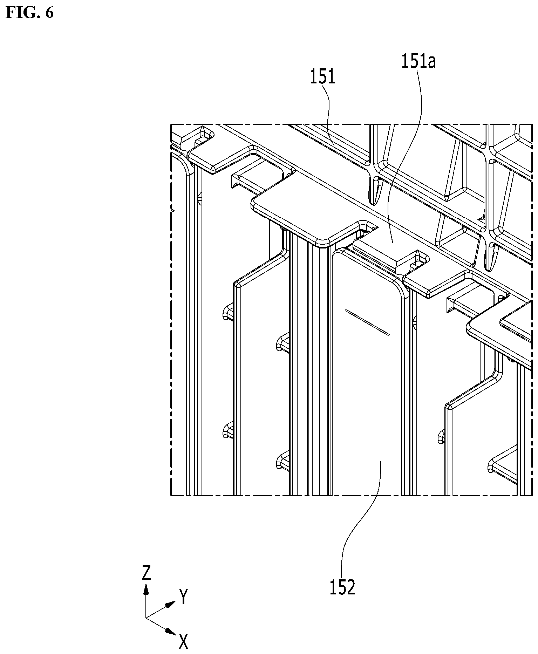

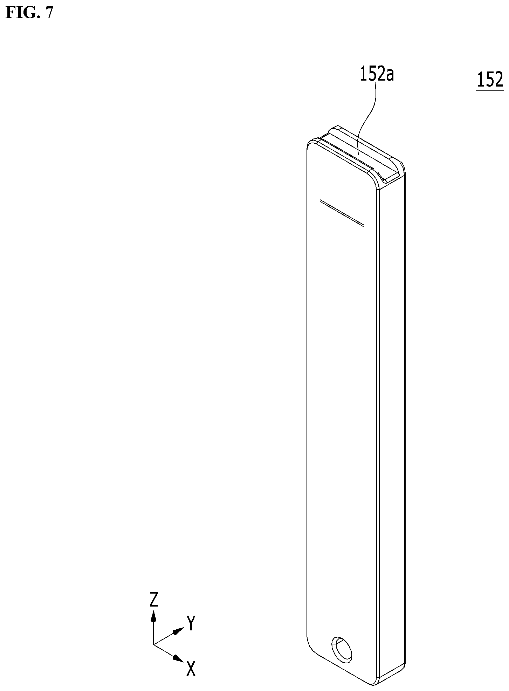

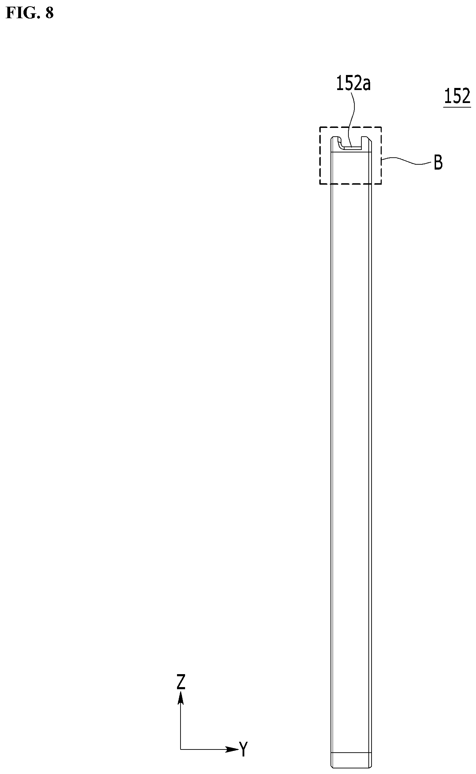

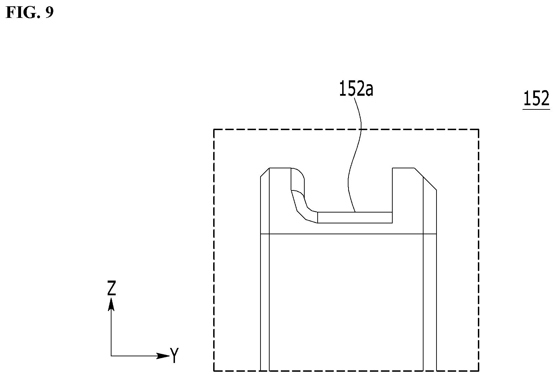

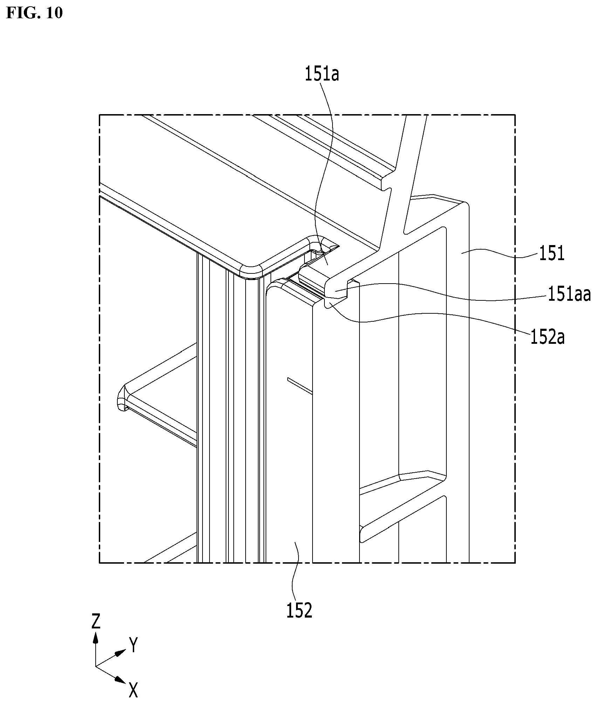

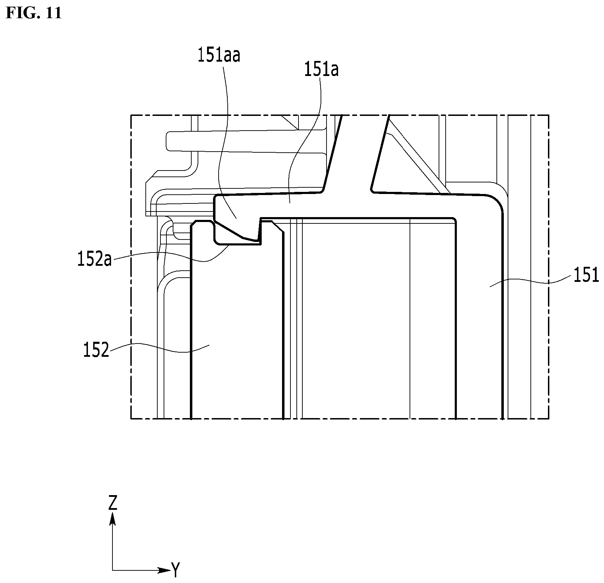

FIG. 1 is a perspective view showing a battery module 100 according to an embodiment of the present disclosure. FIG. 2 is a perspective view showing a busbar frame assembly 150 included in the battery module of FIG. 1. FIG. 3 is a plan view showing a busbar frame assembly 150 included in the battery module of FIG. 1. FIG. 4 is a plan view showing the busbar frame assembly 150 of FIG. 3 viewed from a different angle. FIG. 5 is a perspective view showing a state in which a printed circuit board and a welding plate 154 are removed from the busbar frame assembly 150 of FIG. 2. FIG. 6 is an enlarged view showing a section "A" in FIG. 5 in an enlarged state. FIG. 7 is a perspective view showing a busbar 152 according to an embodiment of the present disclosure. FIG. 8 is a plan view showing the busbar 152 of FIG. 7. FIG. 9 is an enlarged view showing a section "B" of FIG. 8 in an enlarged state. FIG. 10 is a cross-sectional perspective view showing a cross section taken along a cutting line passing through a busbar 152 in the busbar frame assembly of FIG. 5. FIG. 11 is a cross-sectional view of FIG. 10 as viewed in the -X-axis direction.

Referring to FIGS. 1 to 11, a busbar frame assembly 150 according to an embodiment of the present disclosure includes a busbar 152 connected to electrode leads 111 of a plurality of battery cells 110; a printed circuit board 153 connected to the busbars 152 or the electrode leads 111 for sensing the voltage of the battery cells 110; and a busbar frame 151 on which the busbars 152 are disposed. The busbar frame 151 includes a coupling part 151a that couples with the busbar 152, and the busbar 152 includes a recessed part 152a that couples with the coupling part 151a.

The battery module 100 according to the present embodiment may include a plurality of battery cells 110. The battery cells 110 according to the present embodiment may be a battery cells 110 of various shapes, for example, a pouch-type battery cell, a prismatic battery cell, or a cylindrical battery cell. As an example, as shown in FIG. 1, the battery cells 110 according to the present embodiment may be a pouch-type battery cell 110. While the pouch-type battery cells 110 will be described below, the battery cells according to the present embodiment are not limited thereto, and various types of battery cells may be applied.

A plurality of battery cells 110 may be provided within the battery module 100. As an example, the plurality of battery cells 110 may be stacked along one direction so as to be electrically connected to each other, thereby forming a battery cell stack 120. As an example, the plurality of battery cells 110 may be stacked in an upright state along a direction parallel to the X-axis. Under a state where one surface of the battery cell 110 is parallel to the side surface part of the module frame 130, the battery cells 110 may be stacked from one side surface part of the module frame 130 to the other side surface part. Thereby, the electrode leads 111 may protrude in a direction perpendicular to the direction in which the battery cells 110 are stacked. In the battery cells 110, one electrode lead 111 may protrude toward the +Y-axis direction, and the other electrode lead 111 may protrude toward the -Y-axis direction. In the case of the battery cells 110 in which the electrode leads 111 protrude in only one direction, the electrode leads 111 may protrude in the +Y-axis direction or the -Y-axis direction.

The module frame 130 may be a U-shaped frame of which an upper surface, a front surface, and a rear surface are opened. However, the module frame 130 is not limited thereto and may be replaced with a frame of another shape, such as an L-shaped frame or a mono-frame that surrounds the battery cell stack 120 except for the front and rear surfaces. That is, the module frame of another embodiment may be formed as an integrated module frame that is not separated into a U-shaped frame and a top plate.

For example, the module frame 130 may include a bottom part and both side surface parts. The both side surface parts may extend upward in a direction perpendicular to one surface of the bottom part on both opposing sides of the bottom part. The bottom part and both side parts may cover the bottom surface and both side surfaces of the battery cell stack 120. In the battery cell stack 120, one surface of the battery cells 110 may be parallel to the side surface parts of the module frame 130, and the battery cells 110 may be stacked along a direction from one side surface part of the module frame 130 to the other side surface part of the module frame 130.

The top cover 140 may cover the upper part of the battery cells 110. The battery cells 110 may be accommodated in a space formed by the module frame 130 and the top cover 140. The module frame 130 and the top cover 140 are joined together by welding or other methods at corresponding corners, so that the module frame 130 can cover an upper side part, a lower side part, and both side parts of the battery cell stack 120 .

According to the present embodiment, the busbar frame assemblies 150 may be located on the opened first side (Y-axis direction in FIG. 1) and second side (-Y-axis direction in FIG. 1) of the module frame 130 and may be formed to cover the battery cell stack 120. In other words, the busbar frame assemblies 150 may be located to cover the first and second sides of the battery cell stack 120 in the direction in which the electrode leads 111 protrude. The busbar frame assemblies 150 may electrically connect the battery cells 110 included in the battery cell stack 120 in series or parallel.

The busbar frame assembly 150 may include a busbar frame 151 on which busbars 152 are disposed. The busbar frame 151 is a member that prevents the electrode leads 111 and busbars 152 from contacting with other parts of the battery cells 110 and causing a short circuit, and may include an electrically insulating material. Moreover, the busbar frame assembly 150 may include at least one busbar 152 connected to the electrode leads 111. Specifically, at least one busbar 152 may be mounted on one surface of the busbar frame 151, and the other surface of the busbar frame 151 may face the battery cell stack 120. In other words, in the busbar frame 151, the portion where the busbar 152 is mounted and the portion facing the battery cell stack 120 may be located on surfaces opposite to each other. The electrode leads 111 protruding from the battery cells 110 may pass through slits formed in the busbar frame 151 and then be connected to the busbars 152.

According to the present embodiment, the electrode leads 111 connected to the electrode assembly protrude toward the outside of the pouch case, and the electrode leads 111 of each battery cell 110 can be electrically connected to each other via the busbar 152. The busbar 152 is configured to guide electrical connection between the battery cells 110 within the battery module 100 or to guide electrical connection between the battery modules 100. The busbar 152 may be made of a metal material having excellent electrical conductivity, and its shape or material is not limited.

According to the present embodiment, the printed circuit board 153 is configured to sense voltage or thermal data of the battery cells 110. As an example, the printed circuit board 153 may be connected to the electrode leads 111 or busbars 152 of the battery cells 110. Thereby, it is possible to sense voltage data of each battery cell 110 and transmit the sensed data to the BMS (Battery Management System). The BMS may control the operation of the battery module 100 based on the voltage data of the battery cells 110 included in the battery module 100.

The printed circuit board 153 may be a flexible printed circuit board. The printed circuit board 153 may be extended and mounted in the longitudinal direction of the battery cells 110 to sense the battery cells 110. In particular, the printed circuit board 153, which is a flexible printed circuit board, may be bent and electrically connected to the electrode leads 111 or busbars 152 of the battery cells 110. Thereby, it is possible to sense voltage data of each battery cell 110 and transmit the sensed data to the outside.

Meanwhile, the busbar frame assembly 150 may further comprise a busbar frame assembly cover 160 that covers the busbar frame assembly 150. Specifically, the busbar frame assembly cover 160 may cover one surface of the busbar frame 151 on which the busbars 152 are mounted. The busbar frame assembly cover 160 may cover and insulate a plurality of busbars 152 for electrically connecting the battery cells 110, the terminals (not shown) of the battery module 100, and the electrode leads 111, thereby protecting them from the outside. Further, it is possible to prevent disassembly of the battery module 100 by unspecified persons other than an administrator.

Although not shown in the figures, the busbar frame assembly cover 160 may be detachably coupled to the busbar frame 151 through a hook structure. By means of the hook structure, the busbar frame assembly cover 160 may be fixed at a fixed place on the busbar frame 151, and assembly and disassembly may be easily accomplished in a one-touch manner.

Although not shown in the figures, in order to prevent the busbar frame assembly cover 160 from moving, a rib structure of a prescribed shape or the like may be provided on the inner wall of the busbar frame 151.

Referring again to FIGS. 7 to 11, the recessed part 152a according to the present embodiment may be located on one side surface of the busbar 152.

Specifically, the recessed part 152a may be located on one side surface where the busbar 152 is physically coupled to the busbar frame 151. The recessed part 152a may have a recessed shape on the side surface of the busbar 152.

As the recessed part 152a is located on one side surface of the busbar 152, the coupling part 151a of the busbar frame 151 may also be located corresponding to one side surface of the busbar 152. Thereby, the coupling part 151a may be designed so as not to protrude more than one surface of the busbar 152 in the -Y-axis direction of FIG. 10. As will be described later, as the coupling part 151a does not protrude more than one surface of the busbar 152, it is possible to increase the degree of freedom in designing a path of the printed circuit board 153. In addition, it is possible increase design restrictions on the disposition direction of the welding plate 154, thereby increasing the degree of freedom in designing the welding plate 154, and the unit price of the busbar frame assembly 150 may be reduced through component unification of the welding plate 154 .

Referring again to FIGS. 6, 10 and 11, based on a direction perpendicular to one surface of the busbar frame 151, the end of the coupling part 151a may be lower in height than one surface of the busbar 152 where the busbar 152 is joined to the electrode lead 111. Here, one surface of the busbar 152 where the busbar 152 is joined to the electrode lead 111 may be a surface on the opposite side of the surface where the busbar 152 faces the busbar frame 151.

Specifically, in FIG. 11, the left side surface of the busbar 152 may be a surface that is joined to the electrode lead 111. The end of the coupling part 151a may not protrude over the one surface of the busbar 152 in the -Y-axis direction of FIG. 11. Conventionally, a conventional coupling part for fixing a busbar protrudes more than one surface of the busbar and couples to the busbar. In this case, the protruding coupling part has no choice but to impose numerous restrictions on the design and disposition of the welding plate and the printed circuit board. However, as in the present embodiment, as the end of the coupling part 151a does not protrude over one surface of the busbar 152, it is possible to increase the degree of freedom in designing the path of the printed circuit board 153. In addition, it is possible increase design restrictions on the disposition direction of the welding plate 154, thereby increasing the degree of freedom in designing the welding plate 154, and the unit price of the busbar frame assembly 150 can be reduced through component unification of the welding plate 154 .

Referring again to FIGS. 6, 10 and 11, the end of the coupling part 151a may not protrude over one surface of the busbar 152.

Specifically, in FIG. 11, the end of the coupling part 151a may not protrude over one surface of the busbar 152 in the -Y-axis direction of FIG. 11. Thereby, it is possible to avoid interference between the coupling part 151a and components that correspond to or abut against the busbar 152. Therefore, it is possible to prevent events such as internal short circuits.

Referring again to FIGS. 6, 10 and 11, a hook 151aa may be formed on the end of the coupling part 151a.

The coupling part 151a may be detachably coupled to the busbar 152 by means of a hook 151aa formed on the end of the coupling part 151a. By means of the hook 151aa of the coupling part 151a, the busbar 152 may be fixed at a fixed place on the busbar frame 151, and assembly and disassembly can be easily accomplished in a one-touch manner.

Referring again to FIGS. 6, 10 and 11, the hook 151aa may be coupled to the recessed part 152a. The coupling part 151a may be detachably coupled to the recessed part 152a of the busbar 152 by means of a hook 151aa formed on the end of the coupling part 151a. As described above, by means of the hook 151aa of the coupling part 151a, the busbar 152 may be fixed at a fixed place on the busbar frame 151, and assembly and disassembly can be easily accomplished in a one-touch manner.

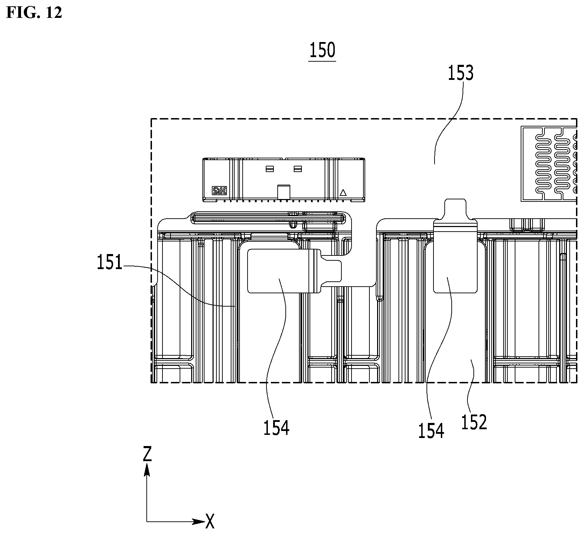

FIG. 12 is an enlarged view showing a section "C" in FIG. 3 in an enlarged state.

Referring to FIG. 12, the busbar frame assembly 150 according to the present embodiment may comprise at least one welding plate 154 that connects a busbars 152 or the electrode leads 111 to a printed circuit board 153.

The welding plate 154 may be connected to the busbars 152, and the welding plate 154 may be connected to the printed circuit board 153. Thereby, the busbar 152 and the printed circuit board 153 may be electrically connected via the welding plate 154.

The welding plate 154 may contain nickel or a nickel alloy having relatively excellent weldability. The welding plate 154 and the busbar 152, and the welding plate 154 and the printed circuit board 153 may be configured to be joined to each other by laser welding. Laser welding generally uses a high-energy laser beam and is capable of fine welding.

Referring back to FIG. 12, the welding plates 154 may all have the same shape. Since the welding plates 154 have the same shape, it may be possible to achieve component unification of the welding plate 154. Thereby, it is possible to reduce the unit price of the busbar frame assembly 150.

Referring again to FIG. 12, at least a part of the welding plate 154 may be located to extend in parallel to the part that extends from the printed circuit board 153 toward the busbar 152.

Specifically, at least a part of the welding plate 154 may be disposed to extend in parallel to the part that extends from the printed circuit board 153 toward the busbar 152 (in the -Z-axis direction in FIG. 12 ), similar to the welding plate 154 of FIG. 12.

Another part of the welding plate 154 may be located to extend perpendicular to the part that extends from the printed circuit board 153 toward the bus bar 152 (in the -X-axis direction of FIG. 12), similar to the welding plate 154 of FIG. 12.

As described above, since the recessed part 152a is located on one side surface of the busbar 152 and the end of the coupling part 151a does not protrude over the one surface of the busbar 152, it is possible to reduce design restrictions on the disposition direction of the welding plate 154. That is, the degree of freedom in designing can be increased compared to a conventional busbar frame assembly 150 in which the coupling part 151a protrudes over one surface of the busbar 152 and couples to the busbar 152. The disposition, direction, shape, etc. of the welding plate 154 can be determined depending on the disposition of the busbars 152, the shape of the printed circuit board 153, and the like.

Referring again to FIG. 1, according to another embodiment of the present disclosure, a battery module 100 comprising a busbar frame assembly 150 is provided.

The application of pouch-type battery cells 110 to the battery module 100 has been described above as an example, but prismatic battery cells 110 or cylindrical battery cells 110 may also be applied to the battery module 100 according to an embodiment of the present disclosure. Furthermore, although the battery module 100 in which the battery cells 110 are accommodated in the module frame 130 has been described as an example, a cell-to-pack (CTP) battery module 100 in which multiple battery cells 110 are mounted to a battery pack without being accommodated in the module frame 130 can also be applied as an example of the present disclosure.

Although the terms representing directions such as front, rear, left, right, upper and lower directions are used in the present embodiment, it would be obvious to those skilled in the art that these merely represent for convenience of explanation, and may differ depending on a position of an observer, a position of an object, or the like.

Although preferred embodiments of the present disclosure have been shown and described in detail above, the scope of the present disclosure is not limited thereto, and various modifications and improvements made by those skilled in the art using the basic concepts of the present disclosure, which are defined in the appended claims, also belong to the scope of the present disclosure.

### [Description of Reference Numerals]

100: battery module
110: battery cell
120: battery cell stack
130: module frame
150: busbar frame assembly
151: busbar frame
151a: coupling part
152: busbar
152a: recessed part
153: printed circuit board
154: welding plate

## Claims

1. A busbar frame assembly, comprising:
a busbar connected to electrode leads of a plurality of battery cells;
a printed circuit board (PCB) connected to the busbars or the electrode leads for sensing the voltage of the battery cells; and
a busbar frame on which the busbars are disposed,
wherein the busbar frame includes a coupling part that couples with the busbar, and
wherein the busbar includes a recessed part that couples with the coupling part.

2. The busbar frame assembly according to claim 1,
wherein the recessed part is located on one side surface of the busbar.

3. The busbar frame assembly according to claim 1,
wherein based on a direction perpendicular to one surface of the busbar frame, the end of the coupling part is lower in height than one surface of the busbar where the busbar is joined to the electrode lead.

4. The busbar frame assembly according to claim 1,
wherein the end of the coupling part does not protrude over the one surface of the busbar.

5. The busbar frame assembly according to claim 1,
wherein the end of the coupling part is formed with a hook.

6. The busbar frame assembly according to claim 5,
wherein the hook is coupled to the recessed part.

7. The busbar frame assembly according to claim 1,
comprising at least one welding plate that connects the busbars or the electrode leads to the printed circuit board.

8. The busbar frame assembly according to claim 7,
wherein the welding plates all have the same shape.

9. The busbar frame assembly according to claim 7,
wherein at least a part of the welding plates is disposed to extend in parallel to a part extending from the printed circuit board toward the busbar.

10. A battery module comprising the busbar frame assembly according to claim 1.
